Europäisches Patentamt

European Patent Office

Office européen des brevets

(19)

(11) Numéro de publication: **0 335 784**
**A1**

## (12) DEMANDE DE BREVET EUROPEEN

(21) Numéro de dépôt: **89400836.6**

(22) Date de dépôt: **24.03.89**

(51) Int. Cl.⁴: **F 16 L 58/00**

(30) Priorité: **30.03.88 FR 8804195**

(43) Date de publication de la demande:
**04.10.89 Bulletin 89/40**

(84) Etats contractants désignés: **DE ES GR**

(71) Demandeur: **SOCIETE INDUSTRIELLE D'ISOLATION ET DE FOURNITURES D'USINES**
**Quartier Le Plan**
**F-13880 Velaux (FR)**

(72) Inventeur: **Storey, Graeme**
**39, Percy Park**
**Tynemouth Tyne and Wear (GB)**

(74) Mandataire: **Bouju, André**
**Cabinet Bouju 38 avenue de la Grande Armée**
**F-75017 Paris (FR)**

(54) **Procédé et dispositif pour le revêtement des tubes soudés.**

(57) Le procédé est destiné au revêtement de tubes métalliques comportant un cordon de soudure (2) dans lequel on applique sur le tube (1) plusieurs couches de matière thermoplastique au moyen d'une bande (21) enroulée autour du tube.

Après l'application d'une première couche de matière thermoplastique, on applique, à cheval sur le cordon de soudure (2) des feuilles (F₁, F₂, F₃, F₄) de matière thermoplastique qui sont juxtaposés l'un à côté de l'autre avec un certain recouvrement bord sur bord, de telle sorte que leur juxtaposition recouvre le cordon de soudure (2) sur toute sa surface ainsi qu'une zone de faible largeur l'encadrant de part et d'autre, puis on continue d'appliquer la (ou les) couche(s) suivante(s) de matière thermoplastique, laquelle (lesquelles) recouvre(nt) ces feuillets (F₁, F₂, F₃, F₄).

Utilisation notamment pour éviter toute réduction d'épaisseur du revêtement en matière thermoplastique au droit du cordon de soudure des tubes métalliques.

FIG.13

EP 0 335 784 A1

## Description

### Procédé et dispositif pour le revêtement des tubes soudés

La présente invention concerne un procédé et un dispositif pour le revêtement, par des couches de protection en matière thermoplastique, de tubes métalliques soudés, notammen en acier, et présentant un cordon de soudure en relief sur leur surface extérieure.

Pour protéger les tubes métalliques, notamment les tubes d'acier, contre la corrosion, on les recouvre d'un revêtement qui est parfois du bitume, mais souvent une matière synthétique thermoplastique, telle que polyéthylène, polypropylène ou analogue.

Le procédé consiste généralement à appliquer, sur la surface du tube préchauffé, d'abord une colle liquide ou visqueuse ou en poudre (notamment colle époxy), et/ou un film mince d'adhésif dit "primaire", puis la matière thermoplastique sous forme d'une bande mince obtenue par extrusion à chaud à travers une filière plate. Cette bande de matière thermoplastique s'enroule en hélice autour du tube qui, simultanément tourne autour de son axe et avance longitudinalement selon cet axe. On obtient ainsi, en plusieurs couches, un revêtement de matière thermoplastique homogène, généralement épais de quelques millimètres.

Ce procédé s'applique facilement aux tubes sans soudure, dont la surface est régulière.

Mais, avec les tubes soudés, il y a des difficultés. Ces tubes, surtout ceux de grand diamètre, ont en effet un cordon de soudure apparent et proéminent (comme représenté sur la figure 1). Ce cordon peut être soit longitudinal, c'est-à-dire suivant une génératrice du tube, comme représenté par la figure 2, soit en hélice comme représenté par la figure 3.

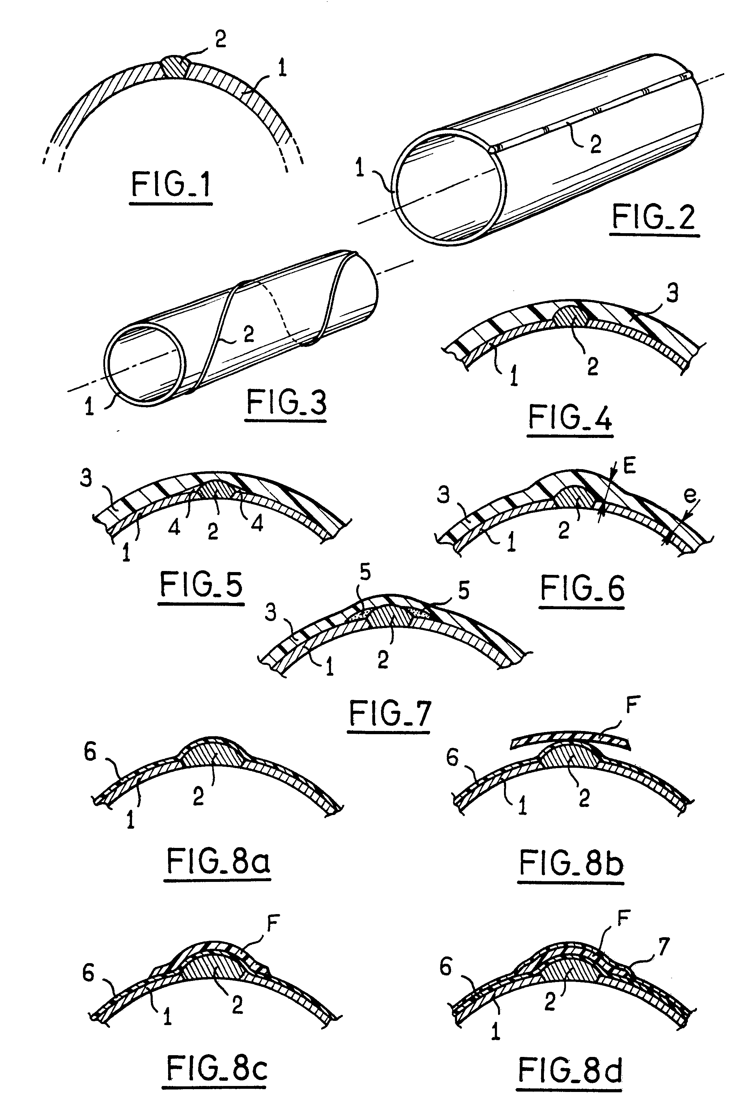

Quand on revêt, comme expliqué ci-dessus, un tube soudé en maintenant constante sa vitesse de rotation et la tension de la bande de matière thermoplastique, le fluage de la matière thermoplastique posée à chaud fait que :
- l'épaisseur du revêtement déposé sur le cordon de soudure est inférieure à l'épaisseur déposée sur le reste de la circonférence du tube (voir figure 4), et, en outre :
- il peut apparaître, de part et d'autre du cordon de soudure, des espaces vides entre la surface du tube et la bande en matière plastique qui, tendue entre l'extrudeuse et le tube, fait pont entre le sommet de la soudure et la surface du tube (voir figure 5).

Ces effets sont néfastes à la protection du tube. Car une protection efficace requiert une épaisseur minimale imposée par les normes et spécifications. Et les vides, s'il y en a, sont des points faibles.

Pour remédier à ces difficultés, diverses solutions sont déjà connues.

Une solution simple consiste à augmenter l'épaisseur du revêtement sur toute la circonférence du tube de façon à pouvoir garantir que l'épaisseur minima requise sera bien respectée sur le sommet du cordon de soudure. Cette solution consomme évidemment plus de matière, donc coûte plus cher. En outre, cette solution ne résout pas le problème des espaces vides (ponts).

D'autres solutions, plus élaborées, ont été décrites (par exemple par les brevets allemands 2 117 618, 2 132 418, 2 260 437). Elles mettent en oeuvre, séparément ou en combinaison, deux sortes de moyens :
- réduire la tension de la bande de matière thermoplastique et ralentir la rotation du tube, au moment de l'application de la bande sur la soudure. Cela permet d'augmenter l'épaisseur de matière qui se dépose dans la partie de la circonférence du tube encadrant le cordon de soudure (voir figure 6). Cela permet aussi à la bande d'épouser plus facilement le profil du cordon de soudure.
- déposer de part et d'autre du cordon de soudure, avant d'y appliquer le revêtement, un matériau d'apport en poudre, ou liquide visqueux, ou boudin préfabriqué), qui évitera la formation des vides (voir figure 7).

Ces solutions plus élaborées comportent cependant encore des inconvénients :
- la partie de la circonférence du tube sur laquelle l'épaisseur de matière est augmentée est assez large: couramment 30 à 40 cm, à cheval sur le cordon de soudure ;
- la tension exercée sur la bande, entre l'extrudeuse et le tube, varie. Cela engendre des irrégularités d'épaisseur du revêtement (plus épais sur le cordon de soudure, mais plus mince ailleurs), et/ou des tensions résiduelles indésirables dans certaines parties du revêtement fini ;
- la mise en oeuvre est difficile ou économiquement inintéressante pour les tubes soudés en hélice ;
- les matériaux d'apport pour éviter les vides de part et d'autre du cordon de soudure sont hétérogènes par rapport à la matière du revêtement, et peuvent diminuer son adhérence au tube.

Le but de la présente invention est de proposer un procédé qui permet d'éviter ces divers inconvénients, ainsi qu'un dispositif pour mettre en oeuvre ce procédé.

Le principe de l'invention consiste à compenser la diminution d'épaisseur de matière thermoplastique qui se déposera sur le cordon de soudure et dans son voisinage de part et d'autre, par l'apport d'un complément de matière thermoplastique sous forme de feuillets dans ces seules zones.

Suivant l'invention, le procédé pour le revêtement de tubes métalliques comportant un cordon de soudure dans lequel on applique sur le tube plusieurs couches de matière thermoplastique d'une bande enroulée autour d'un tube est caractérisé en ce que, avant ou près l'application d'un première couche de matière thermoplastique, on applique, à cheval sur le cordon de soudure, des feuillets de matière thermoplastique qui sont juxtaposés l'un à côté de l'autre avec un certain recouvrement bord sur bord, de telle sorte que leur juxtaposition recouvre le cordon de soudure sur toute sa surface ainsi qu'une zone de faible largeur l'encadrant de part et d'autre, puis on continue d'appliquer la (ou les) couche(s) suivante(s) de matière thermoplastique, laquelle (lesquelles) recouvre(nt) ces feuillets.

Selon ce procédé, dès qu'on a posé sur le cordon de soudure lesdits feuillets, on a compensé la diminution d'épaisseur que la proéminence du cordon de soudure provoque dans la bande de matière plastique qui s'enroule autour du tube.

L'épaisseur des feuillets est choisie précisément pour assurer cette compensation ; l'expérience préalable, ou un essai simple de revêtement d'un tube sans ces feuillets, permet de la déterminer.

Les dimensions des feuilles qui conviennent au procédé sont :
- largeur (suivant la circonférence du tube) convenable pour couvrir la largeur du cordon de soudure proéminent et une zone assez étroite, de l'ordre de 30 à 50 mm, de part et d'autre ;
- longueur (suivant la direction des génératrices du tube) correspondant au pas -ou à un multiple du pas- de l'hélice selon laquelle la bande de matière thermoplastique du revêtement s'enroule autour du tube, plus une petite longueur complémentaire pour le recouvrement du bord de chaque feuillet par le bord du suivant.

L'ensemble des feuillets qui se succèdent ainsi, avec le recouvrement de leurs bords (à la manière d'un jeu de cartes étalé) recouvre donc de façon continue le cordon de soudure et une zone assez étroite de part et d'autre.

Les feuillets peuvent être
- soit fabriqués et découpés séparément à l'avance,
- soit extrudés et découpés sur place.

Dans tous les cas on les préchauffe (pour assurer leur soudage) et on les applique l'un après l'autre à l'endroit et au moment voulu.

Les feuillets peuvent comporter ou non sur leur(s) bord(s) un (ou des) chanfrein(s). Le chanfrein a l'avantage de réduire l'effet de marche d'escalier que produit le recouvrement de deux feuillets voisins bord sur bord, ce qui facilite la bonne application de la bande de matière thermoplastique qui recouvrira les feuillets, et évite la formation de vides.

Il est préférable que la matière des feuillets soit la même matière thermoplastique que celle de la bande de revêtement. Ainsi le soudage des feuillets se fera au mieux, et le revêtement finalement obtenu sera parfaitement homogène.

Si les feuillets sont posés directement sur la colle et/ou le film adhésif primaire, appliqué préalablement sur le tube, ils seront emprisonnés entre lui et la première couche du revêtement. S'ils sont posés après l'application d'une (ou de) première(s) couche(s) de revêtement, ils seront emprisonnés entre la première des couches précédemment appliquées et la dernière de celles qui seront appliquées ensuite.

Sous l'effet de la température à laquelle se passe l'opération, les feuillets, en matière thermoplastique, sont ramollis, et se soudent à la bande de matière plastique qui va les recouvrir et, si c'est le cas, à la bande de matière plastique sur laquelle ils ont été appliqués.

On obtient bien ainsi un revêtement qui a l'épaisseur requise régulièrement sur la circonférence du tube, et en particulier sur le cordon de soudure, et qui est constitué de couches toutes soudées l'une à l'autre, sans vides.

Comme il n'y a pas de surépaisseur à aucun endroit, le procédé est économe en matière thermoplastique. On constate qu'il en consomme jusqu'à environ 20% à 25% de moins que les procédés déjà connus, dans les plus petits diamètres considérés.

Comme la vitesse de rotation du tube, et la tension de la bande de revêtement entre son extrudeuse et le tube restent constantes, il n'y a pas de différence de tensions résiduelles dans le revêtement.

L'invention concerne également le dispositif destiné à mettre en oeuvre le procédé.

Ce dispositif est destiné à appliquer sur des tubes métalliques soudés un revêtement en matière thermoplastique, et comporte de préférence :
- des moyens pour maintenir le tube à revêtir, et le déplacer par translation dans la direction de son axe, et simultanément le faire tourner autour de son axe ;
- des moyens pour enrouler sur le tube une couche adhésive et/ou un film adhésif primaire,
- des moyens pour enrouler sur le tube la bande de revêtement en matière thermoplastique. Suivant l'invention, ce dispositif est caractérisé en ce qu'il comporte en outre des moyens pour poser à cheval sur le cordon de soudure des feuillets de matière thermoplastique, l'un après l'autre, chacun recouvrant sur une petite longueur le bord du précédent et étant ensuite recouvert sur une petite longueur par le bord du suivant, et pour appliquer ces feuilles sur la surface du cordon de soudure ainsi que sur une zone de faible largeur l'encadrant de part et d'autre.

D'autres particularités et avantages de l'invention apparaîtront encore dans la description ci-après.

Aux dessins annexés donnés à titre d'exemples non limitatifs :
- la figure 1 est une vue en coupe partielle d'un tube métallique soudé,
- la figure 2 est une vue en perspective d'un tube métallique soudé, avec soudure longitudinale,
- la figure 3 est une vue en perspective d'un tube métallique soudé, avec soudure en hélice,
- la figure 4 représente, en coupe partielle, un revêtement obtenue par la technique la plus simple, avec diminution d'épaisseur sur le cordon de soudure,
- la figure 5 représente, en coupe, un tel revêtement, avec en outre des vides de part et d'autre du cordon de soudure,
- la figure 6 représente, en coupe, un revêtement obtenu par une technique mettant en oeuvre une réduction de la vitesse de rotation du tube et/ou une réduction de tension de la bande au passage du cordon de soudure,
- la figure 7 représente, en coupe, un revêtement obtenu par une technique comportant l'addition d'un matériau d'apport de part et d'autre du cordon de soudure
- les figures 8a, 8b, 8c, 8d représentent, en coupe, les étapes du procédé selon l'invention,

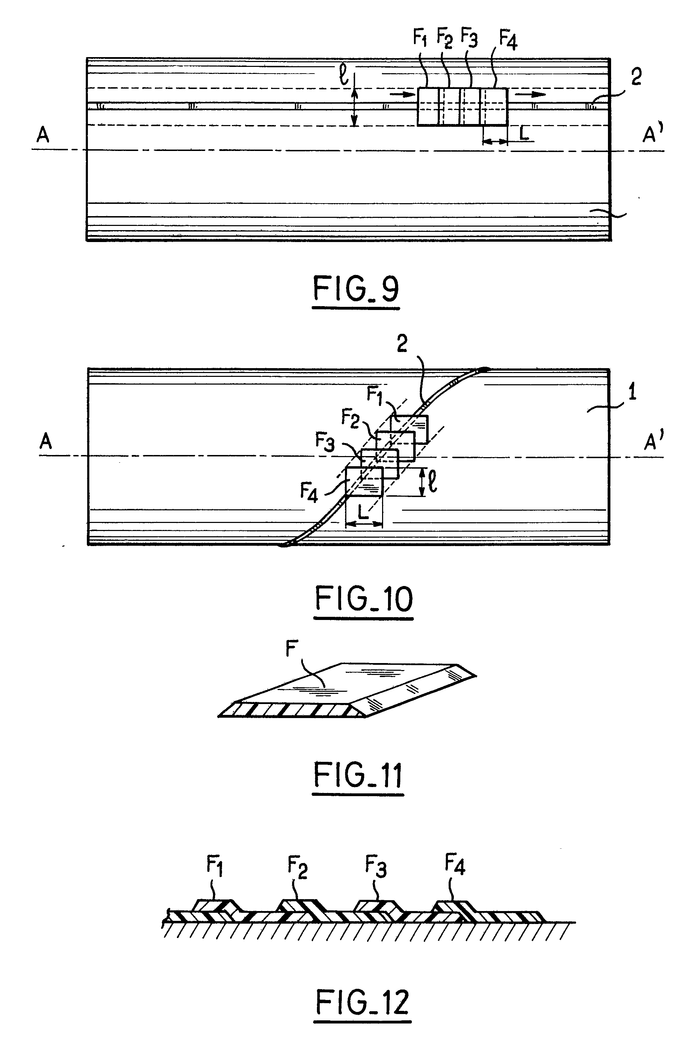

- la figure 9 montre la disposition des feuillets sur un tube à soudure longitudinale,
- la figure 10 montre la disposition des feuillets sur un tube à soudure en spirale,

- la figure 11 représente en perspective un feuillet à bords chanfreinés,

- la figure 12 représente, en coupe, la disposition de plusieurs feuillets successifs avec leurs recouvrements,

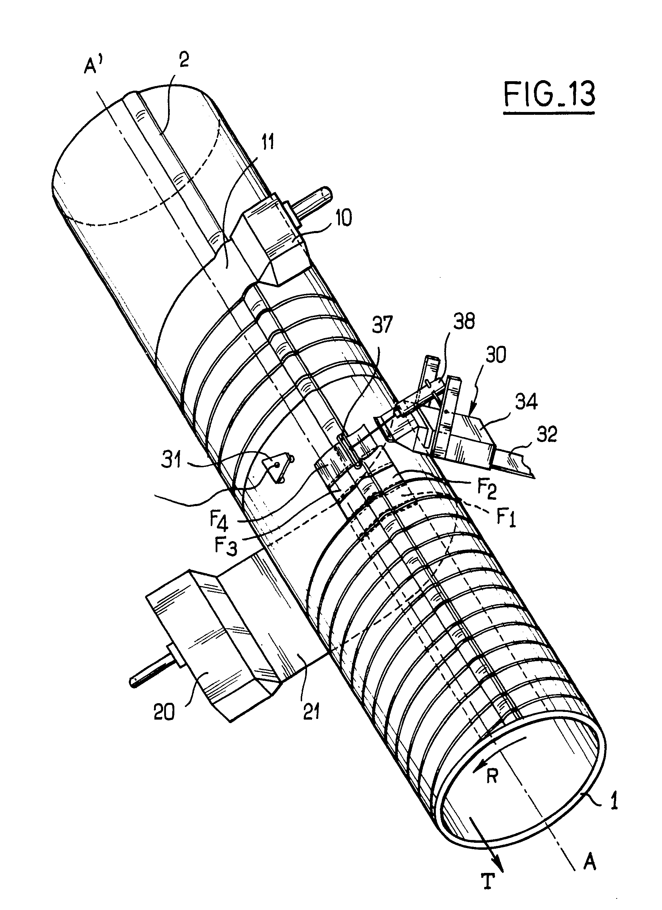

- la figure 13 représente, en perspective, un mode de réalisation de l'ensemble d'un dispositif mettant en oeuvre l'invention,

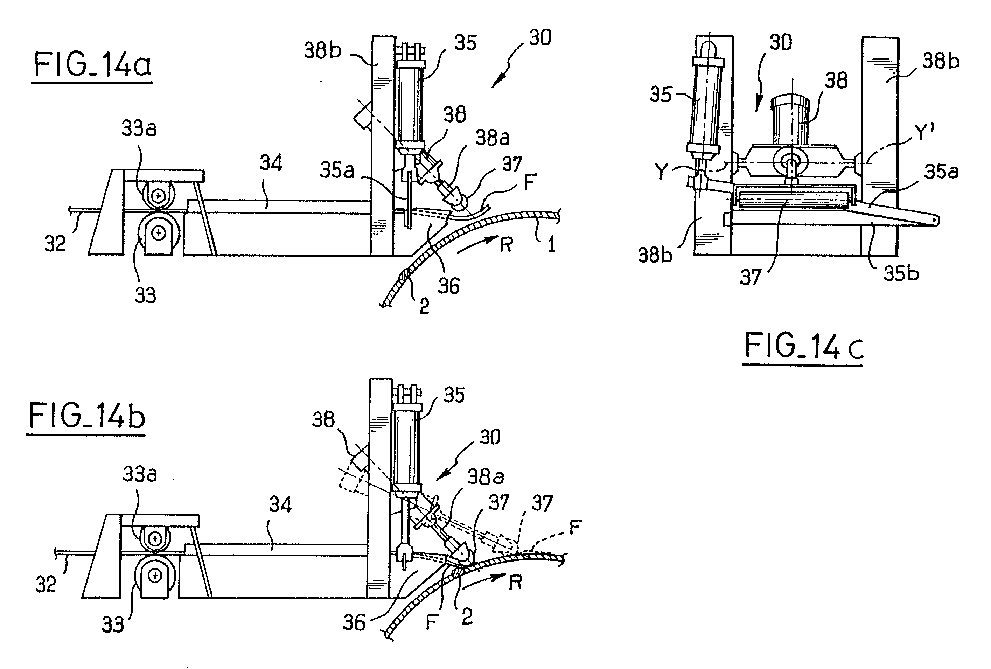

- les figures 14a, 14b, 14c représentent en détail les moyens de pose des feuillets faisant partie du dispositif de la figure 13.

Sur la figure 1, section d'un tube métallique soudé, on voit le métal de la paroi du tube 1, et le cordon de soudure 2, qui fait saillie vers l'extérieur du tube.

Les figures 2 et 3 représentent en perspective un tube métallique soudé, avec une soudure longitudinale (figure 2) ou soudure en hélice (figure 3). La paroi du tube 1 et le cordon de soudure 2 sont désignés par les mêmes repères que sur la figure 1.

Les figures 4 à 7 représentent, en coupe, des revêtements obtenus selon des techniques déjà connues.

Sur la figure 4, on voit comment, avec la technique la plus simple connue, dans laquelle aucune précaution particulière n'est prise, l'épaisseur du revêtement 3 est plus faible sur le cordon de soudure 2 que sur le reste de la périphérie du tube 1.

La figure 5 montre comment, dans ces conditions, peuvent apparaître en outre, de part et d'autre du cordon de soudure 2, des vides 4 entre la paroi du tube 1 et le revêtement 3.

La figure 6 montre une coupe du revêtement 3 que l'on obtient avec une technique connue mettant en oeuvre une réduction de la vitesse de rotation du tube et/ou une réduction de la tension de la bande de matière thermoplastique au passage du cordon de soudure 2.

L'épaisseur du revêtement 3, qui est normalement $e$, augmente à l'approche du cordon de soudure 2, pour atteindre E, puis diminue pour revenir à $e$ sur le sommet du cordon de soudure, puis augmente à nouveau jusqu'à E de l'autre côté du cordon de soudure, pour enfin revenir à $e$ sur le reste de la périphérie du tube.

La figure 7 montre une coupe du revêtement que l'on obtient avec une technique connue comportant l'application d'un matériau d'apport 5 de part et d'autre du cordon de soudure.

Les figures 8a, 8b, 8c, 8d représentent, en coupe, les étapes successives du revêtement réalisé selon l'invention dans la zone du cordon de soudure 2.

A la figure 8a, le tube 1 n'est recouvert que de la première couche 6 du revêtement, à savoir la colle et/ou le film adhésif, plus, éventuellement, une (ou des) première(s) couche(s) de matière thermoplastique.

A la figure 8b, on voit un feuillet F simplement posé sur le cordon de soudure 2.

A la figure 8c, on voit ce feuillet F appliqué sur toute sa surface sur la couche 6 du revêtement recouvrant le cordon de soudure 2 et sur une zone de faible largeur de la paroi du tube 1 de part et d'autre de ce cordon de soudure.

A la figure 8d on voit le feuillet F recouvert par une couche 7 du revêtement.

Des feuillets F de largeur 1 (suivant la circonférence du tube) et de longueur L (suivant la direction des génératrices du tube) sont ainsi appliqués successivement tout le long du cordon de soudure 2.

La figure 9 montre comment les feuillets successifs $F_1$, $F_2$, $F_3$, $F_4$, ... sont disposés le long du cordon de soudure 2 d'un tube 1 d'axe AA' à soudure longitudinale. Le feuillet $F_2$ recouvre sur une petite longueur le bord du feuillet $F_1$, puis sera lui-même recouvert sur une petite longueur par le bord du feuillet $F_3$, et ainsi de suite. C'est ainsi que l'ensemble des feuillets successifs recouvre entièrement le cordon de soudure 2 ainsi qu'une zone de largeur 1 l'encadrant de part et d'autre.

La figure 10 montre de façon analogue la disposition de feuillets $F_1$, $F_2$, $F_3$, $F_4$ sur un tube d'axe AA à soudure en hélice.

Comme on le verra plus loin, le dispositif mettant en oeuvre le procédé, applique sur le cordon de soudure 2, un feuillet F lors de la rotation du tube 1.

La longueur L d'un feuillet F doit donc être au moins égale à la distance $\underline{d}$ dont le tube 1 se déplace suivant la direction de son axe pendant un tour de sa rotation, plus une petite longueur complémentaire destinée au recouvrement sur le bord du feuillet précédent.

La figure 11 représente en perspective un feuillet F rectangulaire dont les bords sont chanfreinés.

On voit sur la figure 12, en coupe normale à la paroi du tube le long du cordon de soudure, comment les feuillets $F_1$, $F_2$, $F_3$, $F_4$ (représentés ici avec leurs bords chanfreinés) se recouvrent successivement l'un sur l'autre.

Dans les figures 9, 10, 11, les feuillets représentés ont une forme rectangulaire. Cette forme n'est pas imposée par le procédé, qui s'accommoderait de toute autre forme, à la seule condition qu'elle permette, par application de feuillets successifs avec recouvrement partiel, de recouvrir entièrement le cordon de soudure 2 ainsi qu'une zone de faible largeur de part et d'autre. La forme rectangulaire à l'avantage de pouvoir être obtenue très simplement par découpe régulière d'une bande de matière thermoplastique extrudée.

Les figures 13, 14a, 14b, 14c représentent un mode de réalisation de l'ensemble d'un dispositif mettant en oeuvre l'invention et illustreront clairement son fonctionnement.

Comme indiqué sur la figure 13, le tube 1, avec son cordon de soudure 2 (représenté ici longitidunal), mais qui pourrait aussi bien être en hélice, est supporté par un organe connu (non représenté) qui assure simultanément sa translation suivant la direction de son axe AA dans le sens de la flèche T et sa rotation autour de son axe AA dans le sens de la flèche R. A côté du tube 1 sont montés les organes d'application du revêtement.

Un organe 10 applique un film adhésif primaire 11. Cet organe 10 est représenté sous la forme d'une extrudeuse d'où sort le film adhésif 11 qui est appliqué et enroulé autour du tube selon une hélice. Le pas de l'hélice est égal à la distance $\underline{d}$ dont le

tube 1 se déplace par translation suivant la direction T pendant la durée d'un tour de sa rotation.

Un organe 20 applique la bande 21 de matière thermoplastique du revêtement. Il est représenté sous la forme d'une extrudeuse d'où sort la bande 21 qui est appliquée et enroulée autour du tube 1 selon une hélice, ayant évidemment le même pas d.

On remarquera que, sur la figure 13, la largeur du film adhésif 11 et celle de la bande 21 de matière thermoplastique sont supérieures au pas d de l'hélice. Cela assure que la surface du tube 1 sera entièrement recouverte. Pour le film adhésif 11, dont une seule épaisseur suffit, une largeur un peu supérieure à d suffit. Pour la bande de revêtement 21, dont le revêtement comportera plusieurs épaisseurs, on peut choisir, comme représenté, une largeur notablement supérieure à d ou même multiple de d.

Ce qui précède relève de techniques connues et n'a été expliqué que pour la bonne compréhension des particularités de l'invention, que nous allons décrire maintenant.

Entre l'organe 10 appliquant le film adhésif 11 et l'organe 20 appliquant la bande 21 de revêtement, est placé un organe 30 supplémentaire, qui est caractéristique de l'invention. Cet organe 30 est alimenté par une bande 32 de matière thermoplastique et, lors de la rotation du tube 1, il découpe un feuillet F, le pose à cheval sur le cordon de soudure 2 et l'applique sur la surface du cordon et de part et d'autre de celui-ci. Cette opération est déclenchée par un automatisme comportant un capteur 31, qui détecte le passage du cordon de soudure 2 et commande alors le fonctionnement de l'organe 30, avec les temporisations convenables pour que le feuillet suivant soit posé juste à cheval sur le cordon de soudure 2 lorsque celui-ci se présentera devant l'organe 30.

Les feuilles $F_1$, $F_2$, $F_3$, $F_4$ se succèdent ainsi, avec recouvrement de leurs bords, comme expliqué plus haut à propos des figures 9, 10 et 12.

Un mode de réalisation de l'organe 30 est représenté plus en détail par les figures 14a, 14b, 14c.

Les figures 14a et 14b sont des coupes par un plan perpendiculaire à l'axe AA' du tube 1. La figure 14c est une vue de face.

La bande de matière thermoplastique 32 est entraînée par des rouleaux motorisés 33, 33a. Elle passe dans un préchauffeur 34, si elle n'est pas extrudée sur place, puis en sort pour se présenter entre les deux couteaux 35a, 35b d'une cisaille commandée par un vérin 35. A chaque rotation du tube 1, cette cisaille coupe la bande, libérant un feuillet F qui repose sur une tablette de maintien 36. Sur les figures 14a et 14c, les deux couteaux 35a, 35b sont représentés en position ouverte et la bande 32 passe entre eux. Sur la figure 14b les couteaux 35a et 35b sont représentés en position fermée, le feuillet F est détaché de la bande 32.

Comme expliqué plus haut, la largeur de la bande alimentée 32, qui sera la longueur L du feuillet F est égale au pas de l'hélice du mouvement du tube 1, plus la petite longueur nécessaire au recouvrement des bords des feuillets. Pendant la durée d'une rotation du tube 1, la bande 32 avance de la distance qui sera la largeur 1 choisie des feuillets.

Le feuillet F reposant sur la tablette 36, va, au moment convenable commandé par l'automatisme, être entraîné et mis en place par un rouleau presseur 37 en matière souple telle que caoutchouc silicone, manoeuvré par un mécanisme à piston 38. Le mécanisme 38 comprend un cylindre dans lequel est monté un piston pouvant coulisser sous l'action d'un fluide. Ce piston porte une tige 38a dont l'extrémité porte le rouleau 37. Le mécanisme 38 est monté pivotant suivant un axe Y-Y' parallèle au tube 1 qui est porté par deux montants 38b. Sur les figures 14a et 14b, ce mécanisme 38 est représenté en traits pleins dans sa position initiale, juste avant qu'il entraîne le feuillet F. A la commande de l'automatisme, le piston du mécanisme abaisse le rouleau presseur 37, qui entraîne le bord du feuillet F du côté du tube 1, l'applique sur la paroi du tube 1 peu avant que passe devant lui le cordon de soudure 2, et presse le feuillet F sur toute sa largeur 1 en épousant le profil du cordon de soudure 2. Le mécanisme 38 permet au rouleau presseur 37 d'accompagner ainsi le feuillet F pendant son application sur le tube 2 qui tourne. La figure 14b représente en traits tiretés le mécanisme 38 avec le rouleau presseur 37 dans sa position extrême finale, où le feuillet F, maintenant appliqué sur toute sa largeur 1 sur le tube, échappe au rouleau presseur 37.

Le mécanisme 38 revient ensuite à sa position initiale (représentée en traits pleins) prêt à opérer un nouveau cycle avec le feuillet suivant.

Bien entendu, l'invention n'est pas limitée à l'exemple de réalisation que l'on vient de décrire et on peut apporter à celui-ci de nombreuses modifications sans sortir du cadre de l'invention.

Ainsi les feuillets F pourraient être réalisés dans une matière différente de celle de la bande de recouvrement enroulée autour du tube.

**Revendications**

1. Procédé pour le revêtement de tubes métalliques comportant un cordon de soudure (2) dans lequel on applique sur le tube (1) plusieurs couches de matière thermoplastique au moyen d'une bande (21) enroulée autour du tube, caractérisé en ce que, avant ou après l'application d'une première couche de matière thermoplastique, on applique, à cheval sur le cordon de soudure (2), des feuillets ($F_1$, $F_2$, $F_3$, $F_4$) de matière thermoplastique, qui sont juxtaposés l'un à côté de l'autre avec un certain recouvrement bord sur bord, de telle sorte que leur juxtaposition recouvre le cordon de soudure (2) sur toute sa surface ainsi qu'une zone de faible largeur l'encadrant de part et d'autre, puis on continue d'appliquer la (ou les) couche(s) suivante(s) de matière thermoplastique, laquelle (lesquelles) recouvre(nt) ces feuillets ($F_1$, $F_2$, $F_3$, $F_4$).

2. Procédé conforme à la revendication 1, caractérisé en ce que la matière thermoplastique des feuillets ($F_1$, $F_2$, $F_3$, $F_4$) est la même

que celle de la bande (21) enroulée autour du tube (1).

3. Procédé conforme à l'une des revendications 1 ou 2, caractérisé en ce que la matière thermoplastique de la bande (21) et des feuillets ($F_1$, $F_2$, $F_3$, $F_4$) est du polyéthylène ou du polypropylène.

4. Procédé conforme à l'une des revendications 1 à 3, caractérisé en ce que les feuillets ont leurs bords de recouvrement chanfreinés.

5. Procédé conforme à l'une des revendication 1 à 4, caractérisé en ce que les feuillets sont réalisés sur place par extrusion et découpés juste avant d'être posés.

6. Procédé conforme à l'une des revendications 1 à 4, caractérisé en ce que les feuillets sont préfabriqués séparément.

7. Dispositif pour appliquer sur des tubes métalliques comportant un cordon de soudure (2) un revêtement en matière thermoplastique, et comprenant :
- des moyens pour maintenir le tube (1) à revêtir, et le déplacer par translation dans la direction de son axe (A-A'), et simultanément le faire tourner autour de son axe ;
- des moyens (10) pour appliquer sur le tube une couche adhésive et/ou un film adhésif primaire (11),
- des moyens (20) pour enrouler sur le tube la bande (21) de revêtement en matière thermoplastique, caractérisé en ce que ce dispositif comporte en outre des moyens (30) pour poser à cheval sur le cordon de soudure (2) des feuillets l'un après l'autre, chacun recouvrant sur une petite longeuer le bord du précédent et étant ensuite recouvert sur une petite longueur par le bord du suivant, et pour appliquer ces feuillets sur la surface du cordon de soudure ainsi que sur une zone de faible largeur l'encadrant de part et d'autre.

8. Dispositif conforme à la revendication 7, caractérisé en ce que les moyens de pose des feuillets ($F_1$, $F_2$, $F_3$, $F_4$) sur le cordon de soudure (2) comportent un rouleau presseur (37) adapté pour presser chaque feuillet sur toute sa largeur en épousant le profil du cordon de soudure.

9. Dispositif conforme à l'une des revendications 7 ou 8, caractérisé en ce qu'il comporte en outre un organe (34) préchauffant la matière thermoplastique des feuillets.

10. Dispositif conforme à l'une des revendication 7 à 9, caractérisé en ce qu'il comporte en outre un organe (35a, 35b) découpant les feuillets.

11. Dispositif conforme à l'une des revendications 7 à 10, caractérisé en ce qu'il comporte en outre un organe extrudant une bande de matière thermoplastique (32) dans laquelle seront découpés les feuillets.

12. Dispositif conforme à l'une des revendications 7 à 11, caractérisé en ce que les moyens de pose, pressage, préchauffage, découpage, extrusion des feuillets ($F_1$, $F_2$, $F_3$, $F_4$) sont commandés, avec les temporisations convenables, par un automatisme déclenché par un capteur (31) qui détecte le passage du cordon de soudure (2) lors de la rotation du tube (1)

13. Dispositif conforme à l'une des revendications 8 à 12, caractérisé en ce qu'il comprend des moyens pour assurer successivement les opérations suivantes :
- extrusion d'une bande de matière thermoplastique (32),
- découpage de cette bande pour obtenir un feuillet ($F_1$, $F_2$, $F_3$, $F_4$) ayant la longueur désirée,
- application et pressage dudit feuillet sur le cordon de soudure (2).

FIG_1

FIG_2

FIG_3

FIG_4

FIG_5

FIG_6

FIG_7

FIG_8a

FIG_8b

FIG_8c

FIG_8d

$F_1$ $F_2$ $F_3$ $F_4$

2

$\ell$

A ———————————————— A'

L

## FIG_9

2

$F_1$

$F_2$

$F_3$

$F_4$

1

A ———————————————— A'

$\ell$

L

## FIG_10

F

## FIG_11

$F_1$ $F_2$ $F_3$ $F_4$

## FIG_12

## FIG. 13

FIG_14a

FIG_14b

FIG_14 c

EP 0 335 784 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | AT-B- 332 182 (DENSO-CHEMIE WEDEKIND) <br> * figure 1, revendication * <br> --- | 1 | F 16 L 58/00 |
| A | DE-A-3 105 971 (THE KENDALL CO) <br> * page 1, lignes 15-32; figure 1 * <br> --- | 1 | |
| A,P | 3R INTERNATIONAL <br> vol. 27, no. 5, juillet 1988, pages 341-344, Essen, RFA; J. JERIG:"Passiver Korrosionsschutz von Rohrleitungen in Problembereichen" <br> ----- | | |

DOMAINES TECHNIQUES RECHERCHES (Int. Cl.4)

F 16 L

Le présent rapport a été établi pour toutes les revendications

| Lieu de la recherche | Date d'achèvement de la recherche | Examinateur |
|---|---|---|
| BERLIN | 30-05-1989 | SCHAEFFLER C.A.A. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................................
& : membre de la même famille, document correspondant

EPO FORM 1503 03.82 (P0402)